(19) Europäisches Patentamt European Patent Office Office européen des brevets

(11) **EP 2 190 144 A1**

(12) **DEMANDE DE BREVET EUROPEEN**

(43) Date de publication:
**26.05.2010 Bulletin 2010/21**

(51) Int Cl.:
*H04L 12/28* (2006.01)   *H04W 48/18* (2009.01)

(21) Numéro de dépôt: **09176827.5**

(22) Date de dépôt: **24.11.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **25.11.2008  FR 0857978**

(71) Demandeur: **Alcatel Lucent**
**75008 Paris (FR)**

(72) Inventeurs:
• **Helbert, Emmanuel**
  **67400, ILLKIRCH (FR)**
• **Bronner, Vincent**
  **67400, ILLKIRCH (FR)**

(74) Mandataire: **Nicolle, Olivier**
**Alcatel-Lucent**
**Intellectual Property & Standards**
**54, rue La Boétie**
**75008 Paris (FR)**

(54) **Procédé et dispositif de gestion des connexions entre une pluralité d'applications embarquées sur un terminal mobile et une pluralité d'interfaces d'accès à des réseaux de communication sans fil**

(57)   Le procédé de gestion de connexions entre une pluralité d'applications (AP) embarquées sur un terminal mobile et une pluralité d'interfaces d'accès à des réseaux de communication sans fil (R) comprend les étapes suivantes :

on enregistre au préalable un premier jeu de données représentatives des besoins en ressource pour chaque application (AP), on collecte un second jeu de données représentatives des caractéristiques techniques courantes de chaque interface d'accès, on calcule en temps réel, de manière continue, dynamique et simultanée, un coefficient de priorité (C) pour chaque couple formé par une application et une interface d'accès en fonction des premier et second jeux de données, et on détermine pour chaque application courante l'interface d'accès ayant le coefficient de priorité le plus élevé à l'instant courant.

FIG_1

EP 2 190 144 A1

## Description

La présente invention concerne la gestion des connexions entre une pluralité d'applications embarquées sur un terminal mobile et une pluralité d'interfaces d'accès à des réseaux de communication sans fil.

Elle trouve une application générale en télécommunication sans fil, et plus particulièrement dans un environnement hétérogène de réseaux de communication sans fil.

Pour effectuer une communication électronique, un terminal mobile accède à un réseau de communication sans fil via une interface d'accès qui relaye les communications entre ce terminal et des éléments du réseau de communication. En pratique, un terminal mobile peut posséder simultanément plusieurs interfaces d'accès permettant chacune un accès à un réseau de communication sans fil différent, tel que GPRS, HSDPA, WiFi public (hot spot) ou privé (home), WiMAX.

Par ailleurs, plusieurs applications peuvent être embarquées sur un terminal mobile et fonctionner simultanément, telles que la messagerie instantanée, le téléchargement de fichiers vidéo, etc.

En pratique, les réseaux de communication sans fil du type GPRS, HSDPA, WiFi ou WiMAX ont des caractéristiques techniques différentes, notamment en termes de bande passante, de robustesse de réseau, de sécurité et/ou de coût de connexion. De même, les applications de type messagerie instantanée ou téléchargement de fichiers ont des besoins différents en termes de ressource, bande passante, de robustesse de réseau, de sécurité et/ou de coût de connexion. De plus, les profils des utilisateurs d'une même application sont généralement distincts d'un utilisateur à l'autre, notamment en termes de comportement, déplacement, abonnement et/ou de condition d'utilisation.

Le Demandeur a observé qu'il y a un besoin d'offrir à un utilisateur d'un terminal portable en présence d'un environnement hétérogène de réseaux de communication et pour une application donnée, la possibilité de se connecter à l'interface d'accès qui présente en temps réel, de manière continue, dynamique et simultanée, la meilleure qualité en termes de bande passante, de robustesse de réseau, de sécurité et/ou de coût de connexion.

La présente invention répond justement à ce besoin.

Ainsi, elle porte sur un procédé de gestion des connexions entre une pluralité d'applications embarquées sur un terminal mobile et une pluralité d'interfaces d'accès à des réseaux de communication sans fil.

Selon une définition générale de l'invention, on enregistre au préalable un premier jeu de données représentatives des besoins en ressource pour chaque application, on collecte un second jeu de données représentatives des caractéristiques techniques courantes de chaque interface d'accès, on calcule en temps réel, de manière continue, dynamique et simultanée, un coefficient de priorité pour chaque couple formé par une application et une interface d'accès en fonction des premier et second jeux de données, et on détermine pour chaque application courante l'interface d'accès ayant le coefficient de priorité le plus élevé à l'instant courant.

Le procédé permet alors de router physiquement en priorité l'interface d'accès ainsi déterminée à l'application correspondante.

Le procédé selon l'invention permet ainsi de manière dynamique, continue et simultanée pour une application donnée embarquée dans un terminal mobile d'accéder au « meilleur » réseau sans fil disponible possible, le « meilleur » réseau étant déterminé par l'intermédiaire d'un calcul d'un coefficient de qualité qui est fonction des caractéristiques courantes des réseaux disponibles, et des besoins en ressource de chaque application.

Avantageusement, on enregistre en outre au préalable pour chaque utilisateur du terminal mobile un troisième jeu de données représentatives de l'historique dudit utilisateur pour chaque couple application-interface réseau, le calcul du coefficient de qualité étant outre établi en fonction dudit troisième jeu de données.

Par exemple, le jeu de données représentatives des caractéristiques techniques de chaque interface d'accès comprend le coût de la liaison sans fil, le niveau de sécurité offert par le réseau (cryptage, authentification, intégrité des données), la robustesse du réseau (perte de connexions), la bande passante minimum utile, l'exclusivité (un responsable informatique peut vouloir interdire l'utilisation d'un réseau particulier).

En pratique, une interface homme-machine ou une interface de type « librairie public » permet aux applications ou à un gestionnaire de flotte de terminaux mobiles d'enregistrer dans une base de données quelle pondération est à appliquer pour chaque caractéristique technique de réseau en regard des besoins en ressource de chaque application.

En pratique, la base de données est en outre prévue pour stocker les évènements réseaux permettant d'établir les historiques des utilisateurs.

Ces évènements peuvent appartenir au groupe formé par le nombre de pertes de connexion, le nombre de déconnexions provoquées par le réseau, la bande passante effective disponible, le coût de l'abonnement téléphonique et le type de facturation (à la connexion, à la durée, au trafic data échangé,...), la durée des connexions, les dates des connexions, le type d'algorithmes de cryptage, le type d'authentification (login/mot de passe, PKI, ...), le type d'algorithme de vérification de l'intégrité.

La présente invention a également pour objet un dispositif de gestion des connexions entre une pluralité d'applications embarquées sur un terminal mobile et une pluralité d'interfaces d'accès à des réseaux de communication sans fil.

Selon un autre aspect de l'invention, le dispositif comprend des moyens d'enregistrement pour enregistrer au préalable un premier jeu de données représentatives des besoins en ressource pour chaque application, des moyens pour collecter un second jeu de données représentatives des caractéristiques techniques courantes de chaque interface d'accès, des moyens de calcul pour calculer en temps réel, de manière continue, dynamique et simultanée, un coefficient de priorité pour chaque couple formé par une application et une interface d'accès en fonction des premier et second jeux de données, et des moyens de traitement pour déterminer pour chaque application courante l'interface d'accès ayant le coefficient de priorité le plus élevé à l'instant courant.

Le dispositif comprend en outre des moyens de routage pour router physiquement en priorité l'interface d'accès ainsi déterminée à l'application correspondante.

Le dispositif comprend en outre des moyens d'enregistrement pour enregistrer en outre au préalable pour chaque utilisateur du terminal mobile un troisième jeu de données représentatives de l'historique dudit utilisateur pour chaque couple application-interface réseau, le calcul du coefficient de qualité étant outre en fonction dudit troisième jeu de données.

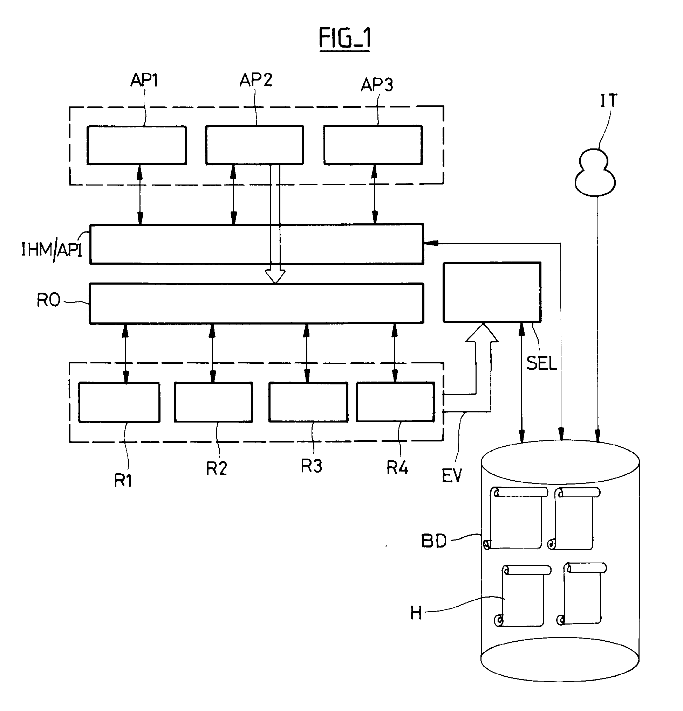

D'autres caractéristiques et avantages de l'invention apparaîtront à la lumière de la description détaillée ci-après et des dessins dans lesquels la figure 1, unique, représente schématiquement un dispositif de sélection conforme à l'invention.

En référence à la figure 1, on va décrire un scénario dans lequel on définit au préalable deux applications AP1 et AP2 embarquées l'une et l'autre sur un terminal mobile et deux utilisateurs U1 et U2 ayant des profils différents. Les utilisateurs U1 et U2 sont en outre susceptibles d'utiliser les applications AP1 et AP2 dans des contextes réseaux différents. Par exemple, l'application AP1 est une application de type bancaire permettant de gérer à distance un ou plusieurs comptes bancaires. L'application AP1 est par exemple mise en oeuvre dans le cadre d'une activité professionnelle. De son côté, l'application AP2 est une application de type messagerie instantanée avec transfert de fichier vidéo. L'application AP2 est par exemple mise en oeuvre dans le cercle privé.

Par exemple, l'utilisateur U1 est un citadin effectuant peu de déplacements hors de la ville de son domicile. Il possède un accès large bande sans fil chez lui. Il travaille à son compte et gère lui-même les outils de communication. Il possède un abonnement 3G qui facture à la quantité de données échangées. De son côté, l'utilisateur U2 est un commercial travaillant pour le compte d'un organisme bancaire et effectue de nombreux déplacements à la fois en France et à l'étranger. L'abonnement 3G est payé par l'employeur et il s'agit d'un abonnement à coût fixe quel que soit le nombre de connexions et le volume de données échangés.

Le profil des utilisateurs U1 et U2 est de préférence stocké dans une base de données BD. Le profil est représenté par les données statiques décrites ci-avant (type d'abonnement) et par la liste des évènements réseaux survenus lors des utilisations précédentes du terminal mobile. Chaque profil d'utilisateur est associé à un accès réseau particulier et pour une application donnée.

On va décrire maintenant des historiques H, individualisés en HUiAPjRk et dédiés chacun à un utilisateur Ui, une application APj et un réseau Rk.

Par exemple, l'utilisateur U1 est en télétravail. La base de données BD enregistre la disponibilité de deux réseaux de communication sans fil R1(Réseau HSDPA public) et R2 (WiFi identifié comme l'accès WiFi privé de l'utilisateur U1).

Pour le réseau R1 (HSDPA) et l'application AP1, l'historique HU1AP1R1 comprend les éléments suivants : Durée totale des connexions : 50 heures, Quantité de données échangées :1 Moctets, Type d'algorithmes de cryptage : HTTPS, Type d'authentification :Login+Pwd.

Pour le réseau R1 (HSDPA) et l'application AP2, l'historique HU1AP2R1 comprend les éléments suivants : Durée totale des connexions : 0.5 heure, Quantité de données échangées 1 Moctets, Type d'algorithmes de cryptage : Aucun, Type d'authentification : Aucune, Nombre de pertes de connexion :1, Nombre de déconnexions provoquées par le réseau : 2, Bande passante effective disponible : 1Mbits/s downlink 300Kbits/s uplink, Coût de l'abonnement : 1€ par kilo-octet, Type d'algorithmes de cryptage : Aucun, Type d'authentification : SIM code PIN, Type d'algorithme de vérification de l'intégrité : Aucun

Pour le réseau R2 (WiFi) et l'application AP1, l'historique HU1AP1R2 comprend les éléments suivants : Durée totale des connexions :50 heures, Quantité de données échangées :10 Moctets, Type d'algorithmes de cryptage : HTTPS, Type d'authentification :Login+Pwd. Pour le réseau R2 (WiFi) et l'application AP2, l'historique HU1A2R2 comprend les éléments suivants : Durée totale des connexions : 100 heures, Quantité de données échangées 100 Moctets, Type d'algorithmes de cryptage :Aucun, Type d'authentification : Aucune, Nombre de pertes de connexion : 100, Nombre de déconnexions provoquées par le réseau :100, Bande passante effective disponible : 54Mbits/s, Coût de l'abonnement :30€ par mois, Type d'algorithmes de cryptage : AES, Type d'authentification : PreShardedKey, Type d'algorithme de vérification de l'intégrité : MIC.

De son côté, l'utilisateur U2 est en déplacement à l'étranger. La base de données BD enregistre la disponibilité de trois réseaux : R1 (Réseau GPRS public), R2 (réseau HSDPA public) et R3 (réseau WiFi identifié comme un accès WiFi public). Le réseau R2 (HSDPA) n'est pas disponible au moment présent.

L'historique HU2AP1R1 comprend par exemple les éléments suivants : Durée totale des connexions : 0 heures, Quantité de données échangées : 0 Moctets, Type d'algorithmes de cryptage : HTTPS, Type d'authentification : Login+Pwd. L'historique HU2A2R1 comprend les éléments suivants : Durée totale des connexions : 0 heure, Quantité de données échangées 0 Moctets, Type d'algorithmes de cryptage : Aucun, Type d'authentification :Aucune, Nombre de pertes de connexion : 0, Nombre de déconnexions provoquées par le réseau :0, Bande passante effective disponible : 100Kbits/s, Coût de l'abonnement: 50€ par mois + surtaxe 1€ la connexion car à l'étranger, Type d'algorithmes de cryptage : Aucun, Type d'authentification : SIM code PIN, Type d'algorithme de vérification de l'intégrité : Aucun.

L'historique HU2AP1 R2 comprend les éléments suivants : Durée totale des connexions: 1 heure, Quantité de données échangées : 0.1 Moctets, Type d'algorithmes de cryptage : HTTPS, Type d'authentification : Login+Pwd. L'historique HU2AP2R2 comprend les éléments suivants : Durée totale des connexions : 0.1 heure, Quantité de données échangées1 Moctets, Type d'algorithmes de cryptage : Aucun,Type d'authentification :Aucune, Nombre de pertes de connexion : 1,Nombre de déconnexions provoquées par le réseau : 1,Bande passante effective disponible : 1Mbits/s downlink 300Kbits/s uplink, Coût de l'abonnement : 50€ par mois + surtaxe 1€ la connexion car à l'étranger, Type d'algorithmes de cryptage : Aucun,Type d'authentification : SIM code PIN, Type d'algorithme de vérification de l'intégrité : Aucun.

L'historique HU2AP1R3 comprend les éléments suivants: Durée totale des connexions : 0 heures, Quantité de données échangées : 0 Moctets, Type d'algorithmes de cryptage : HTTPS, Type d'authentification : Login+Pwd.

L'historique HU2AP2R3 comprend les éléments suivants : Durée totale des connexions : 0 heure, Quantité de données échangées 0 Moctets, Type d'algorithmes de cryptage : Aucun, Type d'authentification : Aucune, Nombre de pertes de connexion : 0, Nombre de déconnexions provoquées par le réseau :0, Bande passante effective disponible : 54Mbits/s, Coût de l'abonnement : 10€ de l'heure, Type d'algorithmes de cryptage : AES, Type d'authentification : PreShardedKey, Type d'algorithme de vérification de l'intégrité : MIC.

Avantageusement, les applications souhaitant bénéficier du service de sélection au meilleur réseau, vont enregistrer des préférences/pondérations, appelées encore besoins en ressource, permettant de pondérer les critères et/ou caractéristiques techniques définissant les « meilleur » réseaux.

En pratique, une interface homme-machine IHM du type graphique (ou une librairie public API embarquée sur le terminal mobile) est prévue pour saisir ces préférences/pondérations.

Dans le scénario qui suit, les critères et/ou caractéristiques techniques sont évalués selon 3 niveaux, de 1 à 3, 3 étant le niveau de recommandation le plus élevé.

Par exemple, l'application AP1 est installée par un administrateur de l'entreprise bancaire IT pour l'utilisateur U2 ou directement par l'utilisateur U1. Au moment de l'installation de l'application bancaire, le procédé détecte qu'une nouvelle application est susceptible d'utiliser le service « connexion au meilleur réseau » et lance une fenêtre graphique permettant à l'administrateur de renseigner les préférences de l'application AP1.

Pour l'utilisateur U1, les préférences vis à vis de l'application AP1 sont par exemple les suivantes : coût de la liaison sans fil : Type : coût au kilooctet transféré Coût unitaire : 0.1€, contrainte de coût : 3, niveau de sécurité offert par le réseau recommandé : 2, niveau de sécurité géré par l'application : 3, niveau de robustesse du réseau recommandé : 3, La bande passant minimum recommandée : 10kOctets/s, Pas d'exclusivité (tous les types de réseaux sont utilisables).

Pour l'utilisateur U2, les préférences vis à vis de l'application AP2 sont par exemple les suivantes : coût de la liaison sans fil : Type : coût au mois, Coût unitaire : 50€, contrainte de coût : 1, niveau de sécurité offert par le réseau recommandé : 2, niveau de sécurité géré par l'application : 3, niveau de robustesse du réseau recommandé : 3, la bande passante minimum recommandée : 10kOctets/s, Interdiction d'utiliser un accès WiFi public.

L'application AP2 est installée par l'utilisateur du terminal mobile. La configuration est réalisé « silencieusement » via une interface API public décrite dans une librairie embarquée sur le mobile. La spécification du coût est dans ce cas gérée directement grâce à un précédent enregistrement de préférences (ici, l'installation de l'application AP1).

Cette librairie API embarquée permet d'enregistrer les critères suivants :

- niveau de sécurité offert par le réseau recommandé,
- niveau de sécurité géré par l'application,
- niveau de robustesse du réseau recommandé,
- la bande passant minimum recommandée,
- exclusivité éventuelle (certains types de réseau peuvent être interdits).

Pour chacun de ces critères, l'interface API propose un poids permettant de caractériser leur importance (ou une valeur absolue dans le cas de critère de bande passante disponible).

L'application qui s'enregistre doit simplement préciser quel poids elle affecte à chacun de ces critères.

A cela, on ajoute, par une configuration externe, le coût de la liaison sans fil et une contrainte de coût égale à 3.

Une interface graphique est prévue en outre pour que l'usager ou l'application puisse renseigner un ou plusieurs couples login/mot de passe associé à l'application.

Pour l'utilisateur U1, les préférences vis à vis de l'application AP2 sont les suivantes : coût de la liaison sans fil : Type : coût au kilooctet transféré Coût unitaire : 0.1€, Contrainte de coût : 3, niveau de sécurité offert par le réseau recommandé : 1, niveau de sécurité géré par l'application : 1, niveau de robustesse du réseau recommandé : 2, La bande passant minimum recommandée : 200kOctets/s, Pas d'exclusivité (tous les types de réseaux sont utilisables).

Pour l'utilisateur U2, les préférences vis à vis de l'application AP2 sont les suivantes : coût de la liaison sans fil : Type : coût au mois Coût unitaire : 50€, Contrainte de coût : 1, niveau de sécurité offert par le réseau recommandé : 1, niveau de sécurité géré par l'application : 1, niveau de robustesse du réseau recommandé : 2, La bande passante minimum recommandée : 200kOctets/s, Pas d'exclusivité (tous les types de réseaux sont utilisables).

Dès que les préférences des applications sont créées et enregistrées dans la base de données BD, le procédé génère un profil utilisateur pour chaque utilisateur basé sur les évènements de réseau EV enregistrés dans la base de données BD au cours des utilisations précédentes des applications AP1 et AP2 par chaque utilisateur.

Un algorithme de sélection SEL va se baser sur l'ensemble de ces données pour calculer en temps réel le meilleur réseau courant pour chaque application. Pour cela, il va déterminer un coefficient représentant la priorité d'utilisation de chaque réseau disponible compte tenu de tous les éléments qu'il a à sa disposition dans la base de données BD.

L'algorithme de calcul SEL est par exemple le suivant :

$$100 + bw*Bw\_coef + (1/(1+cs))*Cs\_coef + sec*Sec\_coef + rob*Rob\_coef$$

où les coefficients représentent les critères recommandées par les applications. Ainsi $Bw\_coef$ représente la contrainte de bande passante, $Cs\_coef$ représente la contrainte de coût, $Sec\_coef$ représente la contrainte de sécurité et $Rob\_coef$ représente la contrainte de robustesse du réseau. Ces coefficients sont liés aux applications. Chacun d'entre eux est multiplié par une valeur représentant l'adéquation du réseau considéré avec ces contraintes. Cette valeur est calculée par l'algorithme en fonction des données contenues dans le profil de l'utilisateur. Le total de la somme correspond au coefficient de priorité proprement dit.

Dans l'exemple on peut avoir pour l'application AP1 :

$$
\begin{aligned}
Bw\_coef &= 1*100, \\
Cs\_coef &= 3*100, \\
Sec\_coef &= 2*100, \\
Rob\_coef &= 3*100.
\end{aligned}
$$

Pour l'application AP2 , on peut avoir :

$$
\begin{aligned}
Bw\_coef &= 3*100, \\
Cs\_coef &= 1*100 \text{ pour l'utilisateur U2 et } 3*100 \text{ pour l'utilisateur U 1}, \\
Sec\_coef &= 1*100, \\
Rob\_coef &= 2*100.
\end{aligned}
$$

Le calcul des valeurs associées à chaque coefficient peut être le suivant :

bw = (Bande passante disponible - Bande passante recommandée)/Bande passante disponible
cs = coût horaire (à calculer en fonction de la tarification)
sec = (Niveau sécurité disponible - Niveau sécurité recommandé)/ Niveau sécurité disponible
rob = 1/(1+(nombre de pertes de connexion)

Le coefficient de priorité CU1A1R1 pour l'utilisateur U1, l'application AP1, et le réseau R1 (HSDPA) tient compte des éléments suivants: Bande passante : bw = (1-0.01)/1 = 0.99, Sécurité : L'application AP1 offre un niveau de sécurité élevé ce qui compense le niveau de sécurité du réseau proprement dit. Dans ce cas, ce dernier n'est pas pris en compte. On obtient : sec = (3 - 2)/3 = 0.33, Robustesse : rob = 1/(1+2) = 0.33, Coût : le coût horaire est 0.1€*1000kilooctets/50 = 2, cs = 2.

Ainsi, le coefficient de priorité CU1A1R1est égal à 100 + 0.99*100 + 1/3*300 + 0.33*200 + 0.33*300 = 465

Le coefficient de priorité CU1A1R2 pour l'utilisateur U1, l'application AP1 et le réseau R2(WiFi) tient compte des éléments suivants :Bande passante : bw = (54-0.01)/54 = 1, Sécurité : L'application AP1 offre un niveau de sécurité élevé ce qui compense le niveau de sécurité du réseau proprement dit. Dans ce cas, ce dernier n'est pas pris en compte. On obtient : sec = (3 - 2)/3 = 0.33, Robustesse : rob = 1/(1+100) = 0.01, Coût : cs = 50 heures/1 mois *] 30€ = 2€.

Ainsi, le coefficient de priorité CU1A1R2 est égal à 100 + 1*100 + 1/(1+2)*300 + 0.33*200 + 0.005*300 = 369.

C'est donc le réseau R1 (HSDPA) qui est prioritaire ici pour l'utilisateur U1 de l'application AP1.

Le coefficient de priorité CU1A2R1 pour l'utilisateur U1 de l'application AP2 vis à vis du réseau R1 (Réseau HSDPA) tient compte des éléments suivants : Bande passante :bw = (1-0.2)/1 = 0.8, Sécurité : le niveau de sécurité disponible est celui du réseau soit 1. Comme le niveau de sécurité recommandé est peu élevé on obtient :sec = (1 - 1) /1 = 0 Robustesse : rob = 1/(1+2) = 0.33, Coût : le coût horaire est 0.1€*1000kilooctets/0.5 = 200 cs = 200.

Ainsi le coefficient de priorité CU1A2R1 est égal à 100 + 0.8*300 + 0*100 + 1/3*200 + (1/200)*300 = 407.5.

Le coefficient de priorité CU1A2R2 pour l'utilisateur U1 de l'application AP2 vis à vis du réseau R2 (Réseau WiFi) tient compte des éléments suivants :Bande passante : bw = (54-0.2)/54 = 0.996, Sécurité : L'application offre un niveau de sécurité élevé ce qui compense le niveau de sécurité du réseau proprement dit. Dans ce cas, ce dernier n'est pas pris en compte. On obtient :sec = (1 - 1)/3 = 0, Robustesse : rob = 1/(1+100) = 0.01 Coût : 100 heures/1 mois * 30€ = 4€ cs = 2.

Ainsi le coefficient de priorité CU1A2R2 est égal à 100 + 0.996*300 + 0*100 + 0.01*200 + (1/5)*300 = 462.

C'est donc l'accès WiFi qui est prioritaire ici pour l'application AP2 par l'utilisateur U1.

Dans le scénario concernant l'utilisateur U2 de l'application AP1, on peut avoir le Réseau HSDPA Non disponible, le réseau R3 (réseau GPRS) disponible et le réseau R2 (Réseau WiFi) Non autorisé.

Dans le scénario concernant l'utilisateur U2 de l'application AP2, le réseau R1 (Réseau HSDPA) est Non disponible, le réseau R3 (Réseau GPRS) comprend les éléments suivants :Bande passante :bw = (0.1-0.2)/0.1 = -1, Sécurité : L'application offre un niveau de sécurité élevé ce qui compense le niveau de sécurité du réseau proprement dit. Dans ce cas, ce dernier n'est pas pris en compte. On obtient: sec = (1 - 1)/3 = 0, Robustesse : rob = 1/(1+0) = 1, Coût : 50€ par mois plus 1€ la connexion = 1/24/30*50 + 1 = 1.7€ cs = 1.7.

Le coefficient de priorité du réseau R3(GPRS) pour l'utilisateur U2 de l'application AP2 est égal à CU2A2R3 = 100 + (-1)*300 + 0*100 + 1 *200 + 1.7*100 = 170.

Le coefficient de priorité du réseau R2(Réseau WiFi)) pour l'utilisateur U2 de l'application AP2 tient compte des éléments suivants : Bande passante :bw = (54-0.2)/54 = 0.996 Sécurité : L'application offre un niveau de sécurité élevé ce qui compense le niveau de sécurité du réseau proprement dit. Dans ce cas, ce dernier n'est pas pris en compte. On obtient : sec = (1 - 1)/3 = 0, Robustesse : rob = 1/(1+0) = 1, Coût : 10€ pour un forfait d'une heure cs = 10€.

Le coefficient de priorité du réseau R2 pour l'utilisateur U2 de l'application AP2 CU2A2R2 est égal à 100 + 0.996*300 + 0*100 + 1*200 + (1/11)*100 = 609

C'est l'accès WiFi (R2) qui ici est prioritaire pour l'utilisateur U2 de l'application AP2.

Un évènement quelconque du réseau EV (modification de la tarification, augmentation de la bande passante disponible, rupture de la connexion,...) est susceptible de modifier considérablement l'une des valeurs et ainsi de modifier le coefficient de priorité affecté au réseau pour cette application.

Ainsi dans le cas précédent de l'utilisateur U2, l'apparition d'un réseau R1 (HSDPA) avec une bande passante disponible plus importante (bw = 0.9 par exemple malgré une plus faible robustesse) donne un coefficient CU2A2R1 de 640 (100 + 0.9*300 + 0*100 + (1/2)*200 + 1.7*100). Après un ré-ordonnancement de la liste des réseaux disponibles, l'algorithme SEL décide dans ce cas de router les données en provenance et à destination de l'application AP2 vers le réseau R1 (HSDPA). Et ainsi de suite après chaque nouvel évènement.

Une fois le meilleur réseau déterminé et sélectionné selon le calcul de coefficient de priorité tel que décrit ci-avant, des moyens de routage RO vont gérer la connectivité entre les applications AP et les interfaces réseaux R.

Ces moyens de routage RO peuvent sélectionner d'office la meilleure interface au lancement de l'application.

En variante, les moyens de routage RO vont gérer un « handover » en cours d'utilisation de l'application. Dans ce cas, le service de sélection doit ré-établir une nouvelle connexion réseau en réutilisant les données utilisées par l'application lors de la première connexion (login, mot de passe, adresse de proxy, etc). Ces données sont également stockées de manière cryptées dans la base de données BD. Ici, l"utilisateur n'a pas conscience que son application utilise dorénavant un autre réseau.

Une variante de l'implémentation peut consister, lors d'un « handover » à demander à l'utilisateur s'il autorise l'utilisation du nouveau réseau sélectionné. Cette possibilité peut être laissée à l'initiative de l'administrateur IT de la flotte de terminaux mobiles lors de l'installation du service de sélection du meilleur réseau.

La présente description est uniquement à titre illustratif et d'autres variantes sont possibles. Par exemple, la gestion des durées de connexion peut ne pas être spécifique à chaque application mais pour un type de réseau en général. La base de données peut aussi être centralisée.

**Revendications**

1. Procédé de gestion de connexions entre une pluralité d'applications (AP) embarquées sur un terminal mobile et une pluralité d'interfaces d'accès à des réseaux de communication sans fil (R) dans lequel on enregistre au préalable un premier jeu de données représentatives des besoins en ressource pour chaque application (AP), on collecte un second jeu de données représentatives des caractéristiques techniques courantes de chaque interface d'accès, on calcule en temps réel, de manière continue, dynamique et simultanée, un coefficient de priorité (C) pour chaque couple formé par une application et une interface d'accès en fonction des premier et second jeux de données, et on détermine pour chaque application courante l'interface d'accès ayant le coefficient de priorité le plus élevé à l'instant courant.

2. Procédé selon la revendication 1 dans lequel on route physiquement en priorité l'interface d'accès ainsi déterminée à l'application correspondante.

3. Procédé selon la revendication 1 dans lequel on enregistre en outre au préalable pour chaque utilisateur du terminal mobile un troisième jeu de données représentatives de l'historique dudit utilisateur pour chaque couple application-interface réseau, le calcul du coefficient de qualité étant établi outre en fonction dudit troisième jeu de données.

4. Procédé selon la revendication 1, dans lequel le jeu de données représentatives des caractéristiques techniques de chaque interface d'accès comprend le coût de la liaison sans fil, le niveau de sécurité offert par le réseau (cryptage, authentification, intégrité des données), la robustesse du réseau (perte de connexions), la bande passante minimum utile, l'exclusivité.

5. Procédé selon la revendication 1, dans lequel on enregistre dans une base de données (BD) quelle pondération est à appliquer pour chaque caractéristique technique de réseau en regard des besoins en ressource de chaque application.

6. Procédé selon la revendication 5, dans lequel on stocke des évènements réseaux permettant d'établir des historiques des utilisateurs.

7. Dispositif de gestion des connexions entre une pluralité d'applications (AP) embarquées sur un terminal mobile et une pluralité d'interfaces d'accès à des réseaux de communication sans fil (R), **caractérisé en ce qu'**il comprend des moyens d'enregistrement (BD) pour enregistrer au préalable un premier jeu de données représentatives des besoins en ressource pour chaque application, des moyens pour collecter un second jeu de données représentatives des caractéristiques techniques courantes de chaque interface d'accès, des moyens de calcul (SEL) pour calculer en temps réel, de manière continue, dynamique et simultanée, un coefficient de priorité pour chaque couple formé par une application et une interface d'accès en fonction des premier et second jeux de données, et des moyens de traitement pour déterminer pour chaque application courante l'interface d'accès ayant le coefficient de priorité le plus élevé à l'instant courant.

8. Dispositif selon la revendication 7, **caractérisé en ce qu'**il comprend en outre des moyens de routage (RO) pour router physiquement en priorité l'interface d'accès ainsi déterminée à l'application courante correspondante.

9. Dispositif selon la revendication 7, **caractérisé en ce qu'**il comprend en outre des moyens d'enregistrement (BD) pour enregistrer en outre au préalable pour chaque utilisateur du terminal mobile un troisième jeu de données représentatives de l'historique dudit utilisateur pour chaque couple application-interface réseau, le calcul du coefficient de qualité étant outre en fonction dudit troisième jeu de données.

10. Dispositif selon la revendication 7 ou la revendication 8, **caractérisé en ce qu'**il comprend une interface de type librairie public (API) ou homme-machine (IHM) pour permettre aux applications ou à un gestionnaire de flotte de terminaux mobiles d'enregistrer dans une base de données (BD) quelle pondération est à appliquer pour chaque caractéristique technique de réseau en regard des besoins en ressource de chaque application.

11. Dispositif selon la revendication 9 ou la revendication 10, **caractérisé en ce que** la base de données (BD) est apte à stocker des évènements réseaux (EV) permettant d'établir des historiques (H) des utilisateurs.

## FIG_1

Europäisches
Patentamt

European
Patent Office

Office européen
des brevets

# RAPPORT DE RECHERCHE EUROPEENNE

Numéro de la demande

EP 09 17 6827

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2008/011420 A (QUALCOMM INC [US]; RAJU LALIT YERRAMILLI [US]; GIL AMIT [US]; DAGBEGNO) 24 janvier 2008 (2008-01-24)<br>* abrégé *<br>* alinéas [0032] - [0034] *<br>* alinéa [0039] *<br>* figures 1-5 *<br>----- | 1-11 | INV.<br>H04L12/28<br>H04W48/18 |
| A | US 7 434 076 B1 (ALTOUNIAN DAVID [US] ET AL) 7 octobre 2008 (2008-10-07)<br>* le document en entier *<br>----- | 1-11 | |

DOMAINES TECHNIQUES
RECHERCHES (IPC)

H04L

Le présent rapport a été établi pour toutes les revendications

| Lieu de la recherche | Date d'achèvement de la recherche | Examinateur |
|---|---|---|
| Munich | 18 février 2010 | Fantacone, Vincenzo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                                         
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 6827

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-02-2010

| Document brevet cité au rapport de recherche | | Date de publication | Membre(s) de la famille de brevet(s) | | Date de publication |
|---|---|---|---|---|---|
| WO 2008011420 | A | 24-01-2008 | CA | 2654469 A1 | 24-01-2008 |
| | | | EP | 2070361 A1 | 17-06-2009 |
| | | | JP | 2009544262 T | 10-12-2009 |
| | | | KR | 20090033481 A | 03-04-2009 |
| | | | US | 2008019339 A1 | 24-01-2008 |
| US 7434076 | B1 | 07-10-2008 | AUCUN | | |

EPO FORM P0460

Pour tout renseignement concernant cette annexe : voir Journal Officiel de l'Office européen des brevets, No.12/82